# EUROPÄISCHE PATENTSCHRIFT

(11) **EP 3 794 154 B1**
(45) Veröffentlichungstag und Bekanntmachung des Hinweises auf die Patenterteilung: **30.07.2025**
(21) Anmeldenummer: 19723351.3
(22) Anmeldetag: 07.05.2019
(51) Int. Cl.: C22B 11/00, C25F 5/00, C22B 7/00, C22B 3/04, C25B 15/08

(54) **VERFAHREN ZUR GEWINNUNG VON GOLD, SILBER UND PLATINMETALLEN AUS BESTANDTEILEN EINES BRENNSTOFFZELLENSTAPELS ODER EINES ELEKTROLYSATORS**
METHOD FOR RECOVERING GOLD, SILVER AND PLATINUM METALS FROM COMPONENTS OF A FUEL CELL STACK OR OF AN ELECTROLYZER
PROCÉDÉ SERVANT À OBTENIR DE L'OR, DE L'ARGENT ET DES MÉTAUX DU GROUPE DU PLATINE À PARTIR DE CONSTITUANTS D'UN EMPILEMENT DE PILES À COMBUSTIBLE OU D'UN ÉLECTROLYSEUR

(30) Priorität: 16.05.2018 DE 102018207589
(43) Veröffentlichungstag der Anmeldung: 24.03.2021
(73) Patentinhaber: Robert Bosch GmbH, 70442 Stuttgart (DE)
(72) Erfinder: TROSSMANN, Torsten, 71636 Ludwigsburg (DE); BALDIZZONE, Claudio, 70174 Stuttgart (DE)
(86) Internationale Anmeldenummer: PCT/EP2019/061630
(87) Internationale Veröffentlichungsnummer: WO 2019/219444

(56) Entgegenhaltungen:
- WO-A1-2014/166494
- DE-A1- 102012 109 063
- DE-A1- 102015 212 504
- JP-A- 2015 161 019

## Beschreibung

Die vorliegende Erfindung betrifft ein Verfahren zur Gewinnung von Gold und/oder Silber und/oder mindestens einem Platinmetall aus Bestandteilen eines Brennstoffzellenstapels einer Brennstoffzelle oder eines Elektrolysators. Weiterhin betrifft die vorliegende Erfindung eine Vorrichtung zur Gewinnung von Gold und/oder Silber und/oder mindestens einem Platinmetall aus Bestandteilen eines Brennstoffzellenstapels einer Brennstoffzelle oder eines Elektrolysators, die zur Durchführung des Verfahrens geeignet ist.

### Stand der Technik

Brennstoffzellenstapel einer Brennstoffzelle und Elektrolysatoren benötigen Gold, Silber und Platinmetalle wie Platin, Palladium, Ruthenium und Iridium als essenzielle Rohstoffe. Ihre Rückgewinnung aus den Brennstoffzellenstapeln oder Elektrolysatoren kann pyrometallurgisch oder hydrometallurgisch erfolgen. Die pyrometallurgische Rückgewinnung erfolgt, indem die gesamte Brennstoffzelle pyrolysiert wird. Die erhaltene edelmetallreiche Asche kann dann durch verschiedene Verfahren aufbereitet werden. Dies ist allerdings sehr energieintensiv und mit dem Entstehen toxischer Emissionen verbunden.

Bei der hydrometallurgischen Rückgewinnung werden die Brennstoffzellenstapel aus den Brennstoffzellen entfernt. Dann werden die zurückzugewinnenden Metalle durch Komplexbildung in eine wässrige Lösung gebracht. Hydrometallurgische Verfahren werden in der Regel bei sehr hohen oder sehr niedrigen pH-Werten, also unter Verwendung aggressiver Säuren oder Laugen durchgeführt. Die verwendeten Komplexbildner sind häufig toxisch, so dass auch diese Verfahren zu gefährlichen Emissionen führen. Beispielsweise führt der Einsatz von Königswasser bei hohen Temperaturen zu gefährlichen Stickoxidemissionen.

In dem Artikel N. Hodnik, C. Baldizzone "Platinum recycling going green via induced surface potential alteration enabling fast and efficient dissolution", 2016, Nature Communications, Vol. 7 wird beschrieben, wie aus einem Industriekatalysator Platin und Palladium mit Chlorid als Komplexbildner bei einem pH-Wert von 1 zurückgewonnen werden kann. Die Rückgewinnung von Ruthenium und Iridium mit Chlorid als Komplexbildner kann im pH-Bereich von 13 bis 14 erfolgen. Hierbei wird abwechselnd ein Oxidationsmittel und eine Reduktionsmittel eingesetzt.

Die JP 2015 161019 A offenbart ein Verfahren zur Rückgewinnung von Edelmetallen aus einer Membranelektrodenanordnung einer Brennstoffbatterie.

### Offenbarung der Erfindung

Das Verfahren gemäß Anspruch 1 und die Vorrichtung gemäß Anspruch 8 dienen zur Gewinnung von Gold und/oder von Silber und/oder von mindestens einem Platinmetall aus Bestandteilen eines Brennstoffzellenstapels einer Brennstoffzelle oder eines Elektrolysators, um ein Recycling dieser Materialien zu ermöglichen. Unter Platinmetallen (Platinum Group Metals; PGM) werden dabei die leichten Platinmetalle Ruthenium, Rhodium und Palladium und die schweren Platinmetalle Osmium, Iridium und Platin verstanden.

Der Oxidationsschritt kann in einer Ausführungsform des Verfahrens geschehen, indem die Bestandteile zunächst mit dem Gas behandelt werden und dann mit der Elektrolytlösung in Kontakt gebracht werden. In einer anderen Ausführungsform des Verfahrens wird das mindestens eine gasförmige Oxidationsmittel in die Elektrolytlösung eingeleitet, bevor diese mit den Bestandteilen in Kontakt gebracht wird. Bei dem gasförmigen Oxidationsmittel kann es sich insbesondere um Ozon handeln.

Das Oxidationsmittel bewirkt eine transiente Lösung von Gold und/oder Silber und/oder mindestens einem Platinmetall aus den Bestandteilen, deren Metallkationen in der Elektrolytlösung komplexiert werden. Als Komplexbildner werden vorzugsweise Chlorid-Anionen, Bromid-Anionen und/oder Iodid-Anionen verwendet, die in der Elektrolytlösung insbesondere als Alkali-Chloride, Alkali-Bromide und/oder Alkali-Iodide enthalten sind. Diese bilden mit den Metallkationen Halogenidkomplexe.

Der pH-Wert der Elektrolytlösung liegt vorzugsweise im Bereich von mehr als 0 bis weniger als 14. Es muss also lediglich mit verdünnten Säuren und Laugen gearbeitet werden, was das Verfahren sicherer als herkömmliche Verfahren macht. Geeignete Säuren zum Einstellen eines pH-Wertes von weniger als 7 sind insbesondere die starken Säuren Salzsäure (HCl), Perchlorsäure (HClO₄), Schwefelsäure (H₂SO₄) und Salpetersäure (HNO₃). Geeignete Laugen zum Einstellen eines pH-Wertes von mehr als 7 sind insbesondere die starken Laugen Natronlauge (NaOH) und Kalilauge (KOH).

In dem Reduktionsschritt werden die Bestandteile in der Brennstoffzelle oder dem Elektrolysator mit einem Strom einer wässrigen Elektrolytlösung behandelt und sie werden mit mindestens einem gasförmigen Oxidationsmittel behandelt. Dies kann in einer Ausführungsform des Verfahrens geschehen, indem die Bestandteile zunächst mit dem Gas behandelt werden und dann mit der Elektrolytlösung in Kontakt gebracht werden. In einer anderen Ausführungsform des Verfahrens wird das mindestens eine gasförmige Reduktionsmittel in die Elektrolytlösung eingeleitet, bevor diese mit den Bestandteilen in Kontakt gebracht wird. Bei dem Reduktionsmittel handelt es sich insbesondere um Wasserstoff oder um ein Gemisch aus Wasserstoff und Kohlenmonoxid. Die Anwesenheit einiger Reduktionsmittel kann zwar in Abhängigkeit von ihrem Redoxpotential zur Ausfällung der komplexierten Metalle führen, hat aber positive Effekte, die diesen Nachteil überwiegen. Zum einen wird die Oberfläche der Ausgangsmaterialien reduziert und so beispielsweise von Oberflächenoxiden befreit, wobei die Metalle leicht in Lösung übergehen. Außerdem kann eine transiente Lösung von Metallen erfolgen, insbesondere von Platin, Ruthenium und Iridium. Dies macht die neugeschaffene Metalloberfläche einer späteren Reaktion mit dem Oxidationsmittel zugänglich. Wird durch eine Reaktion zwischen dem Oxidationsmittel und Halogenid-Ionen der Elektrolytlösung ein Halogen erzeugt, so kann dieses durch eine Reaktion zwischen dem Halogen und dem Reduktionsmittel wieder zu einem Halogenid reduziert werden. Der Oxidationsschritt und der Reduktionsschritt können sich in dem Verfahren mehrfach abwechseln.

Um sicherzustellen, dass sich kein Oxidationsmittel mehr in der Brennstoffzelle befindet, wenn der Reduktionsschritt beginnt bzw. dass sich kein Reduktionsmittel mehr in der Brennstoffzelle befindet, wenn der Oxidationsschritt beginnt ist es bevorzugt, dass zwischen dem Oxidationsschritt und dem Reduktionsschritt ein Spülschritt vorgesehen ist. In dem Spülschritt werden die Bestandteile mit mindestens einem Inertgas, wie beispielsweise Stickstoff oder einem Edelgas behandelt. Das Inertgas kann entweder direkt über die Bestandteile geleitet werden, oder es kann in den Strom einer wässrigen Elektrolytlösung eingeleitet werden, welche mit en Bestandteilen in Kontakt gebracht wird.

Es ist bevorzugt, dass im Oxidationsschritt, im Reduktionsschritt und im Spülschritt dieselbe Elektrolytlösung verwendet wird. Dabei findet in Ausführungsformen des Verfahrens, in denen die Gase in die Elektrolytlösung eingeleitet werden, in den unterschiedlichen Schritten lediglich ein Wechsel des in die Elektrolytlösung eingeleiteten Gases, also des Oxidationsmittels, des Reduktionsmittels und des Inertgases statt. In Ausführungsformen des Verfahrens, in denen die Bestandteile abwechseln mit Gasen und mit der Elektrolytlösung behandelt werden, wird findet ebenfalls ein Wechsel des Gases statt, während stets dieselbe Elektrolytlösung verwendet wird. Dies ermöglicht eine einfache Verfahrensführung.

In einer Ausführungsform des Verfahrens wird die Elektrolytlösung aus mindestens einem Vorratsbehälter zu den Bestandteilen geleitet. Dabei kann sie stromabwärts des Vorratsbehälters mit dem Oxidationsmittel, dem Reduktionsmittel oder dem Inertgas versetzt werden. Nach Kontakt mit den Bestandteilen wird die Elektrolytlösung in einem Sammelbehälter gesammelt. Sofern aus dem Oxidationsschritt und dem Reduktionschritt noch Oxidationsmittel und Reduktionsmittel in der Elektrolytlösung enthalten sind, welche nicht mit den Bestandteilen reagiert haben, so reagieren sie spätestens im Sammelbehälter miteinander ab. Nachdem die Gewinnung der Metalle aus den Bestandteilen abgeschlossen ist, können die Metalle aus der im Sammelbehälter erhaltenen Lösung ausgefällt werden, indem sie beispielsweise unter Zugabe von Wasserstoff als Reduktionsmittel reduziert werden. Die ausgefällten Metalle werden dann für die Weiterverarbeitung gesammelt.

In einer anderen Ausführungsform des Verfahrens ist eine kontinuierliche Verfahrensführung vorgesehen. Dabei wird die Elektrolytlösung in einem Kreislauf geführt, in dem sie mehrfach mit den Bestandteilen in Kontakt gebracht wird. Vor erneuter Einleitung der Elektrolytlösung in die Brennstoffzelle wird diese mit dem im jeweiligen Reaktionsschritt benötigten Gas, also dem Oxidationsmittel, dem Reduktionsmittel oder dem Inertgas versetzt. Nach Ende der Metallgewinnung wird die Elektrolytlösung aus dem Kreislauf abgelassen und kann dann wie der Inhalt des Sammelbehälters in der diskontinuierlichen Ausführungsform des Verfahrens aufgearbeitet werden.

Während einige Metalle nur in saurer Lösung lösliche Metallkomplexe bilden, bilden andere Metalle nur in alkalischer Lösung lösliche Metallkomplexe. So bildet Ruthenium beispielsweise bei einem pH-Wert von mehr als 7 lösliche Komplexe, während Platin bei einem pH-Wert von weniger als 7 lösliche Hexachloroplatinat(IV)-Komplexe bildet. Um alle Metalle, die Ziel dieses Verfahrens sind, aus den Bestandteilen des Brennstoffzellenstapels oder eines Elektrolysators zurückgewinnen zu können ist es daher bevorzugt, dass die Bestandteile in einem ersten Teil des Verfahrens mit einer Elektrolytlösung behandelt werden, deren pH-Wert größer als 7 ist. In einem zweiten Teil des Verfahrens werden sie dann mit einer Elektrolytlösung behandelt, deren pH-Wert kleiner als 7 ist. Die Bezeichnung "erster Teil" und "zweiter Teil" soll dabei nicht als Einschränkung hinsichtlich der Reihenfolge verstanden werden, in der die Teile des Verfahrens durchgeführt werden können. Es kann auch zunächst der zweite Teil, mit dem pH-Wert von kleiner als 7 durchgeführt werden und dann der erste Teil, mit dem pH-Wert von größer als 7 folgen.

Die Vorrichtung zur Gewinnung von Gold und/oder Silber und/oder mindestens einem Platinmetall aus Bestandteilen eines Brennstoffzellenstapels einer Brennstoffzelle oder eines Elektrolysators weist mindestens einen Vorratsbehälter für eine Elektrolytlösung auf. Wenn die Vorrichtung mehrere Vorratsbehälter aufweist, können diese zum einen vorgesehen sein, um dieselbe Elektrolytlösung an unterschiedlichen Stellen in ein Leitungssystem der Vorrichtung einzuspeisen oder sie können Elektrolytlösungen mit unterschiedlichen pH-Werten enthalten.

Eine erste Leitung ist mit einer Auslassöffnung des mindestens einen Vorratsbehälters verbunden. Sie weist einen Anodeneinlassanschluss auf, welcher an einem Anodeneinlass einer Brennstoffzelle oder eines Elektrolysators angeschlossen ist. Weiterhin weist sie einen Kathodeneinlassanschluss auf, welcher an einem Anodeneinlass einer Brennstoffzelle oder eines Elektrolysators angeschlossen ist. Mindestens eine Oxidationsmitteleinleitung ist eingerichtet, um mindestens ein gasförmiges Oxidationsmittel in die erste Leitung einzuleiten. Mindestens eine Reduktionsmitteleinleitung ist eingerichtet, um mindestens ein gasförmiges Reduktionsmittel und/oder Inertgas in die erste Leitung einzuleiten. Die erste Leitung kann dabei einfach oder mehrfach verzweigt sein und Ventile aufweisen, um den Strom einer Elektrolytlösung aus dem Vorratsbehälter und/oder einen Gasstrom durch die erste Leitung zu steuern. Zum Transport der Elektrolytlösung ist weiterhin mindestens eine erste Pumpe vorgesehen, die in der ersten Leitung angeordnet ist. Die Vorrichtung kann mit dem Anodeneinlassanschluss und dem Kathodeneinlassanschluss an den Anodeneinlass und den Kathodeneinlass einer Brennstoffzelle angeschlossen werden, um eine Elektrolytlösung aus dem Vorratsbehälter in die Brennstoffzelle einzuleiten.

Die Vorrichtung ist zur Durchführung des Verfahrens geeignet. Im Oxidationsschritt des Verfahrens kann mittels der mindestens einen Oxidationsmitteleinleitung gasförmiges Oxidationsmittel in den Strom der Elektrolytlösung eingeleitet werden. Alternativ kann im Oxidationsschritt durch ein geeignetes Schalten von Ventilen zuerst ein gasförmiges Oxidationsmittel und dann die Elektrolytlösung durch die erste Leitung geleitet werden. Im Reduktionsschritt kann mittels der Reduktionsmitteleinleitung gasförmiges Reduktionsmittel in den Strom der Elektrolytlösung eingeleitet werden. Alternativ kann im Reduktionsschritt durch ein geeignetes Schalten von Ventilen zuerst ein gasförmiges Reduktionsmittel und dann die Elektrolytlösung durch die erste Leitung geleitet werden. Im Spülschritt kann das Inertgas durch die Reduktionsmitteleinleitung in den Strom der Elektrolytlösung eingeleitet werden. Alternativ kann im Spülschritt nur das Inertgas durch die erste Leitung geleitet werden. Wenn mehrere Reduktionsmitteleinleitungen vorhanden sind, so kann auch vorgesehen sein, dass eine Reduktionsmitteleinleitung ausschließlich für das gasförmige Reduktionsmittel oder eine andere Reduktionsmitteleinleitung ausschließlich für das Inertgas verwendet wird. Die Vorrichtung ermöglicht es, Gold und/oder Silber und/oder mindestens ein Platinmetall aus den Bestandteilen des Brennstoffzellenstapels oder eines Elektrolysators zu gewinnen ohne die Brennstoffzelle hierfür zerlegen zu müssen. Vielmehr werden die für die Gewinnung benötigten Chemikalien unter Verwendung der sowieso in der Brennstoffzelle vorhandenen Anschlüsse in diese eingeleitet.

Zum Ablassen der Elektrolytlösung aus der Brennstoffzelle ist in unterschiedlichen Ausführungsformen der Vorrichtung jeweils eine zweite Leitung vorgesehen, welche einen Anodenauslassanschluss aufweist, welcher an einem Anodenauslass der Brennstoffzelle oder des Elektrolysators angeschlossen ist. Weiterhin weist sie einen Kathodenauslassanschluss auf, welcher an einem Kathodenauslass der Brennstoffzelle oder des Elektrolysators angeschlossen ist. Ebenso wie die erste Leitung kann auch die zweite Leitung einfach oder mehrfach verzweigt sein und Ventile aufweisen, um den Strom der Elektrolytlösung zu steuern.

In einer Ausführungsform der Vorrichtung weist diese weiterhin einen Sammelbehälter für die Elektrolytlösung auf, welcher mit der zweiten Leitung verbunden ist. Diese Ausführungsform der Vorrichtung ermöglicht eine diskontinuierliche Verfahrensführung.

In einer weiteren Ausführungsform der Vorrichtung ist die zweite Leitung stromaufwärts der Oxidationsmitteleinleitung und der Reduktionsmitteleinleitung mit der ersten Leitung verbunden. Diese Ausführungsform der Vorrichtung ermöglicht eine kontinuierliche Verfahrensführung, in der die Elektrolytlösung zunächst aus dem Vorratsbehälter in die erste Leitung eingespeist wird und anschließend mittels der ersten Leitung und der zweiten Leitung im Kreislauf geführt wird.

In noch einer weiteren Ausführungsform der Vorrichtung ist die zweite Leitung mit einer Einlassöffnung des Vorratsbehälters verbunden. Auch diese Ausführungsform der Vorrichtung ermöglicht eine kontinuierliche Verfahrensführung. Hierbei wird allerdings Elektrolytlösung, welche die Brennstoffzelle verlässt, nicht direkt in die erste Leitung eingespeist, sondern sie strömt stattdessen in den Vorratsbehälter und vermischt sich mit dem dort bevorrateten Vorrat der Elektrolytlösung.

Wenn Ozon als Oxidationsmittel verwendet wird, so muss dieses aufgrund seiner Kurzlebigkeit in der Vorrichtung generiert werden. In einer Ausführungsform der Vorrichtung ist dabei vorgesehen, dass sie einen elektrochemischen Ozonisator mit einem Ozonauslass und einem Wasserstoffauslass aufweist. Dabei fungiert der Ozonauslass als Oxidationsmitteleinleitung und der Wasserstoffauslass fungiert als Reduktionsmitteleinleitung. Auf diese Weise kann auch Wasserstoff, welcher in dem Verfahren als Reduktionsmittel fungieren kann, in der Vorrichtung produziert werden.

### Kurze Beschreibung der Zeichnungen

Ausführungsbeispiele der Erfindung sind in den Zeichnungen dargestellt und werden in der nachfolgenden Beschreibung näher erläutert.
Fig. 1 zeigt schematisch eine Vorrichtung zur Gewinnung von Gold und/oder Silber und/oder mindestens einem Platinmetall gemäß einem Ausführungsbeispiel der Erfindung.
Fig. 2 zeigt schematisch eine Vorrichtung zur Gewinnung von Gold und/oder Silber und/oder mindestens einem Platinmetall gemäß einem anderen Ausführungsbeispiel der Erfindung.
Fig. 3 zeigt schematisch eine Vorrichtung zur Gewinnung von Gold und/oder Silber und/oder mindestens einem Platinmetall gemäß noch einem anderen Ausführungsbeispiel der Erfindung.
Fig. 4 zeigt schematisch eine Vorrichtung zur Gewinnung von Gold und/oder Silber und/oder mindestens einem Platinmetall gemäß noch einem anderen Ausführungsbeispiel der Erfindung.
Fig. 5 zeigt schematisch eine Vorrichtung zur Gewinnung von Gold und/oder Silber und/oder mindestens einem Platinmetall gemäß noch einem anderen Ausführungsbeispiel der Erfindung.
Fig. 6 zeigt schematisch eine Vorrichtung zur Gewinnung von Gold und/oder Silber und/oder mindestens einem Platinmetall gemäß noch einem anderen Ausführungsbeispiel der Erfindung.

### Ausführungsbeispiele der Erfindung

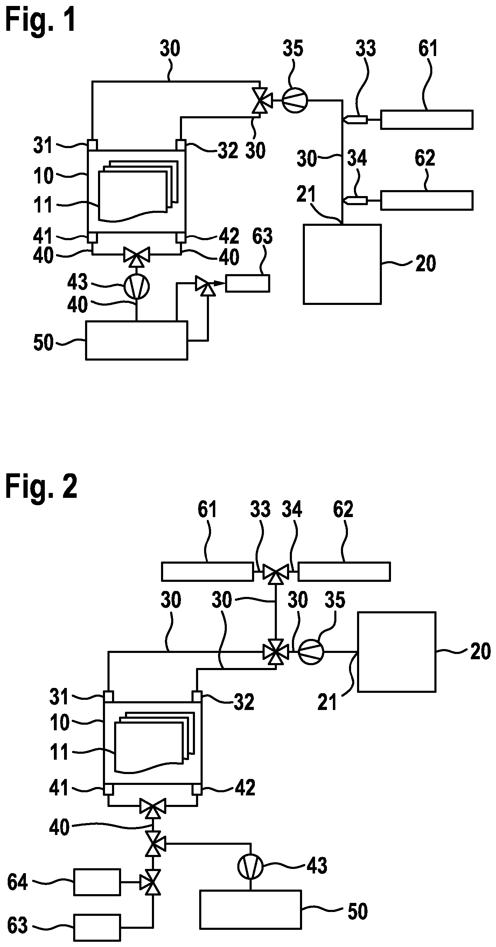

In Fig. 1 ist eine Brennstoffzelle 10 dargestellt, die an eine Vorrichtung gemäß einem ersten Ausführungsbeispiel der Erfindung angeschlossen ist. Die Brennstoffzelle 10 enthält einen Brennstoffzellenstapel 11. Dieser enthält Ruthenium und Platin als Katalysatormaterialien auf Kohlenstoff als Trägermaterial. In einem Vorratsbehälter 20 ist eine wässrige Elektrolytlösung bevorratet, die 0,1 M NaOH und 3 M NaCl enthält. Diese Elektrolytlösung hat einen pH-Wert von 13. Der Vorratsbehälter 20 ist über eine Auslassöffnung 21 mit einer ersten Leitung 30 verbunden. Die erste Leitung 30 verzweigt sich zu einem Anodeneinlassanschluss 31 und einem Kathodeneinlassanschluss 32 an der Brennstoffzelle 10. Vor der Verzweigung sind eine Oxidationsmitteleinleitung 33 und eine Reduktionsmitteleinleitung 34 an der ersten Leitung 30 angeordnet, die jeweils als Venturi-Düse ausgeführt sind. Stromabwärts der Oxidationsmitteleinleitung 33 und der Reduktionsmitteleinleitung 34 ist vor der Verzweigung eine Pumpe 35 in der ersten Leitung 30 angeordnet, um die Elektrolytlösung durch die erste Leitung 30 zu fördern. Eine zweite Leitung 40 ist mit einem Anodenauslassanschluss 41 und einem Kathodenauslassanschluss 42 an der Brennstoffzelle 10 angeschlossen. Zwei Teilabschnitte dieser zweiten Leitung 40, die von Brennstoffzelle 10 ausgehen, vereinigen sich zu einem gemeinsamen Leitungsstrang, in dem eine zweite Pumpe 43 angeordnet ist. Diese zweite Pumpe 43 fördert die mittels der ersten Pumpe 35 in die Brennstoffzelle 10 hineingeleitete Elektrolytlösung wieder aus dieser hinaus und leitet sie in einen Sammelbehälter 50. Die Oxidationsmitteleinleitung 33 ist mit einem Ozonisator 61 verbunden, der mittels des Corona-Effekts ein Gemisch aus Sauerstoff und Ozon erzeugt. Die Reduktionsmitteleinleitung 34 ist mit einer Gasleitung 62 verbunden, durch welche wahlweise Wasserstoff, Kohlenmonoxid, Stickstoff oder Gemische dieser Gase eingeleitet werden können. Der Sammelbehälter 50 ist über weitere Leitungen mit einem Ozonzersetzer 63 verbunden, um in den Vorratsbehälter 50 gelangtes und aus diesem austretendes Ozon zu zersetzen.

In einem Ausführungsbeispiel des erfindungsgemäßen Verfahrens wird in einem ersten Oxidationsschritt Elektrolytlösung in die Brennstoffzelle 10 geleitet, die mittels der Oxidationsmitteleinleitung 33 mit Ozon versetzt wird. Dabei findet eine oberflächliche Oxidation von Platin und Ruthenium im Brennstoffzellenstapel 11 statt. Da Chlorokomlexe des Platins oberhalb eines pH-Wertes von 7 in wässriger Lösung nicht stabil sind, geht kein Platin in Lösung. Es findet jedoch eine transiente Auflösung von Ruthenium statt. Nachdem sich eine kompakte Oxidschicht an der Oberfläche der Metalle gebildet hat, stoppt die Auflösung. Nun wird in einem Spülschritt das Einleiten der Elektrolytlösung fortgesetzt, diese wird aber nicht mehr mit Ozon versetzt, sondern stattdessen mittels der Reduktionsmitteleinleitung 34 mit Stickstoff versetzt. Nachdem mittels dieses Inertgases das nicht abreagierte Ozon aus der Brennstoffzelle 10 herausgespült wurde, wird in einem Reduktionsschritt der Strom der Elektrolytlösung durch die Reduktionsmitteleinleitung 34 mit Wasserstoff versetzt. Dabei wird die Oxidschicht im Brennstoffzellenstapel 11 reduziert, wobei weiteres Ruthenium in Lösung geht. Sobald alle Oxide reduziert worden sind, wird ein weiterer Spülschritt durchgeführt, in dem Stickstoff in den Strom der Elektrolytlösung eingespeist wird, um nicht abreagierten Wasserstoff aus der Brennstoffzelle 10 zu entfernen. Dann werden die Reaktionsschritte beginnend beim Oxidationsschritt wiederholt, bis das gesamte Ruthenium aufgelöst wurde. In der zweiten Leitung 40 oder im Sammelbehälter 50 ist eine nicht dargestellte Messeinheit angeordnet, mit der die Konzentration von Ruthenium-Komplexen in dem Strom der Elektrolytlösung überwacht werden kann, um so den Wechsel zwischen den einzelnen Reaktionsschritten zu steuern. Nach Auflösung des gesamten Rutheniums wird die im Sammelbehälter 50 gesammelte Ruthenium-Lösung aus diesem entnommen.

Die Elektrolytlösung im Vorratsbehälter 20 wird nun durch eine wässrige Lösung von 0,3 M HCl und 3 M NaCl ersetzt. Diese weist einen pH-Wert von ca. 0,5 auf. Unter Verwendung dieser Elektrolytlösung wird nun die bereits mit der ersten Elektrolytlösung durchgeführte Abfolge von Oxidationsschritt, Spülschritt, Reduktionsschritt und erneutem Spülschritt wiederholt. Hierbei wird die Elektrolytlösung im Reduktionsschritt allerdings nicht mit reinem Wasserstoff, sondern mit einem Gemisch aus 90 Gew.-% Wasserstoff und 10 Gew.-% Kohlenmonoxid versetzt. Bei diesem pH-Wert bildet das Platin nun stabiles H₂PtCl₆ und kann so durch Oxidation der Platinoberfläche und anschließende Reduktion der Oxide transient gelöst werden. Dabei adsorbiert das im Reduktionsschritt zugefügte Kohlenmonoxid an der Platinoberfläche und verhindert so ein Ausfällen von Platin im Reduktionsschritt. Auch der Auflösungsprozess des Platins wird mittels der nicht dargestellten Messeinheit überwacht. Sobald auch das gesamte Platin aufgelöst wurde, wird die Platinlösung aus dem Sammelbehälter 50 entnommen. Die beiden Metalllösungen können nun durch Ausfällung der jeweiligen Metalle mittels Einleitung von Wasserstoff aufgearbeitet werden.

Ein zweites Ausführungsbeispiel der Vorrichtung ist in Fig. 2 dargestellt. In diesem Ausführungsbeispiel sind die Oxidationsmitteleinleitung 33 und die Reduktionsmitteleinleitung 34 nicht zwischen dem Vorratsbehälter 20 und der ersten Pumpe 35 angeordnet. Stattdessen zweigt am Verzweigungspunkt der ersten Leitung 30 ein weiterer Teilstrang ab, in dessen Ende sowohl die Oxidationsmitteleinleitung 33 als auch die Reduktionsmitteleinleitung 34 münden. Diese sind in diesem Ausführungsbeispiel der Vorrichtung nicht als Venturi-Düsen, sondern als Ventile ausgeführt. Der Teilstrang der ersten Leitung 30 zwischen dem Verzweigungspunkt und der Oxidationsmitteleinleitung 33 bzw. der Reduktionsmitteleinleitung 34 dient dabei nicht dem Transport der Elektrolytlösung, sondern ausschließlich dem Gastransport. Weiterhin ist in diesem Ausführungsbeispiel vorgesehen, dass der Ozonzersetzer 63 nicht stromabwärts des Sammelbehälters 50 angeordnet ist. Stattdessen verzweigt sich die zweite Leitung 40 vor der zweiten Pumpe 43 mehrfach und führt zu dem Ozonzersetzer 63 und einer Auslassleitung 64. Bei Verwendung dieser Vorrichtung wird die Elektrolytlösung nicht bereits vor Einleitung in die Brennstoffzelle 10 mit dem für den Oxidationsschritt, Reduktionsschritt oder Spülschritt benötigen Gas versetzt. Stattdessen wird im Oxidationsschritt zunächst ohne Einleitung der Elektrolytlösung Ozon in die Brennstoffzelle 10 eingeleitet, wobei nicht umgesetztes Ozon in den Ozonzersetzer 63 gelangt. Ventile verhindern, dass gasförmiges Ozon zur Auslassleitung 64 oder in die Pumpe 43 gelangt. Dann wird die wässrige Elektrolytlösung durch die Brennstoffzelle 10 geleitet, um Metallionen aufzunehmen. Diese wird mittels Ventilen durch die zweite Pumpe 43 in den Sammelbehälter 50 geleitet. Anschließend erfolgt ein Spülschritt, in dem Stickstoff durch die Brennstoffzelle 10 geleitet wird und die Vorrichtung durch die Auslassleitung 64 verlässt. Im Reduktionsschritt wird Wasserstoff (zum Reduzieren von Rutheniumoxiden) bzw. das Wasserstoff/Kohlenmonoxid-Gemisch (zum Reduzieren von Platinoxiden) durch die Brennstoffzelle 10 geleitet, welches die Vorrichtung ebenfalls durch die Auslassleitung 64 verlässt, und dann weitere Elektrolytlösung in die Brennstoffzelle 10 eingeleitet, um Metallionen zu komplexieren und diese in den Sammelbehälter 50 zu leiten. Der zweite Spülschritt wird wiederum ohne Verwendung der Elektrolytlösung nur durch Einleitung von Stickstoff durchgeführt, wonach wieder mit einem Oxidationsschritt begonnen wird. Der Wechsel zwischen den unterschiedlichen Elektrolytlösungen und die Aufarbeitung der Metalllösungen erfolgt in derselben Weise, wie bei Verwendung der Vorrichtung gemäß dem ersten Ausführungsbeispiel der Erfindung.

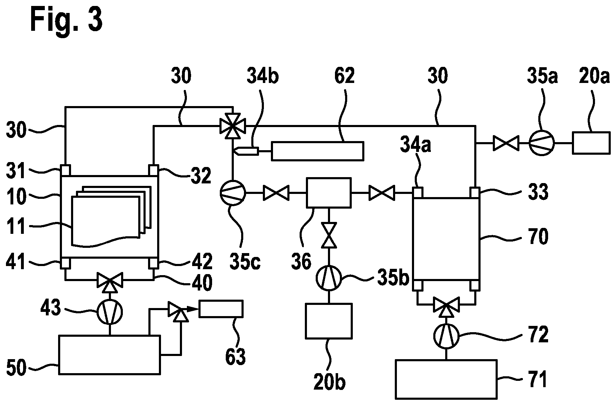

Ein drittes Ausführungsbeispiel der Vorrichtung, welches in Fig. 3 dargestellt ist, sieht vor, dass Ozon und Wasserstoff mittels eines elektrochemischen Ozonisators 70 hergestellt werden. Dieser wird aus einem Wassertank 71 mit destilliertem Wasser versorgt, welches mittels einer dritten Pumpe 72 in den elektrochemischen Ozonisator 70 geleitet wird. Im Oxidationsschritt wird Ozon aus dem Ozonauslass des elektrochemischen Ozonisators 70, der als Oxidationsmitteleinleitung 33 fungiert, durch die erste Leitung 30 in die Brennstoffzelle 10 geleitet. Anschließend wird aus dem ersten Vorratsbehälter 20a und der dazugehörigen ersten Pumpe 35a Elektrolytlösung durch die Brennstoffzelle 10 geleitet. Bei der Erzeugung von Ozon entsteht gleichzeitig ein Gemisch aus Wasserstoff und Wasserdampf. Dieses wird durch den Wasserstoffauslass des elektrochemischen Ozonisators 70, der als Reduktionsmitteleinleitung 34a fungiert, in einen Tank 36 geleitet und dort gesammelt. Im Reduktionsschritt wird zunächst das Wasserstoff/WasserGemisch aus dem Tank 36 in die Brennstoffzelle 10 geleitet und anschließend aus einem zweiten Vorratsbehälter 20b mittels der zugehörigen ersten Pumpe 35b Elektrolytlösung in die Brennstoffzelle 10 geleitet. Eine weitere erste Pumpe 35c ist so in der ersten Leitung 30 angeordnet, dass sie die Wasser-/Wasserstoff-Mischung fördern kann. Stromabwärts dieser ersten Pumpe 35c ist außerdem ein weiterer Reduktionsmitteleinlass 34b angeordnet, der als Venturi-Düse ausgeführt ist. Mittels dieses Reduktionsmitteleinlasses 34b kann im Reduktionsschritt Kohlenmonoxid in das Wasser/Wasserstoff-Gemisch eingeleitet werden oder im Spülschritt kann in den Strom der Elektrolytlösung aus dem zweiten Vorratsbehälter 20b Stickstoff eingeleitet werden. Der Spülschritt wird bei Verwendung dieser Vorrichtung nur nach dem Reduktionsschritt und vor dem nächsten Oxidationsschritt durchgeführt, nicht aber nach dem Oxidationsschritt und vor dem darauffolgenden Reduktionsschritt. Hinsichtlich der Verwendung unterschiedlicher Elektrolytlösungen und der Aufarbeitung der Metalllösungen wird wie in den vorhergehenden Ausführungsbeispielen verfahren.

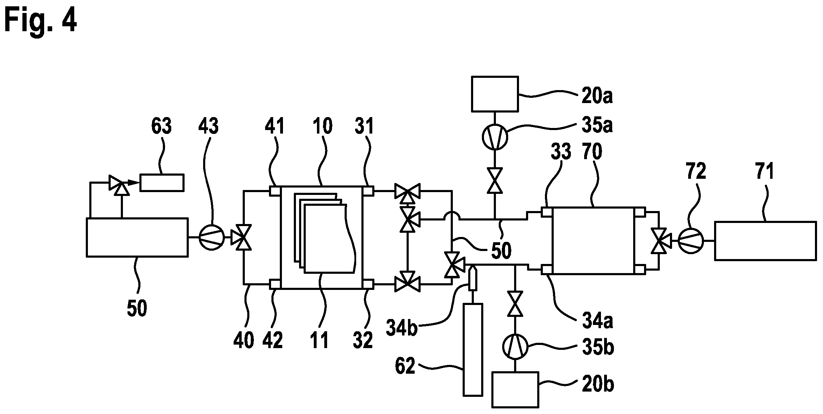

Fig. 4 zeigt ein viertes Ausführungsbeispiel der Vorrichtung. Dieses ermöglicht einen kontinuierlichen Betrieb des elektrochemischen Ozonisators 70. Das Wasserstoff-/Wasser-Gemisch, das bei der Reduktion von Platinoxiden noch zusätzlich mit Kohlenmonoxid versetzt wird, wird hierbei durch geeignetes Schalten von Ventilen in der ersten Leitung 30 entweder durch den Anodeneinlassanschluss 31 oder durch den Kathodeneinlassanschluss 32 in die Brennstoffzelle 10 geleitet. Durch den anderen der beiden Anschlüsse 31, 32 wird gleichzeitig Ozon in die Brennstoffzelle 10 eingeleitet. Sowohl das Ozon als auch die reduzierenden Gase werden mit Elektrolytlösung aus zwei Vorratsbehältern 20a, 20b vermischt, bevor sie in die Brennstoffzelle 10 gelangen. Durch Umschalten der Ventile kann abwechselnd an der Kathode und der Anode der Oxidationsschritt sowie der Reduktionsschritt durchgeführt werden. Dabei vereinigen sich die Lösungen aus der Oxidation an der einen Elektrode und der Reduktion an der anderen Elektrode in der zweiten Leitung 40. Die Spülschritte werden an beiden Elektroden gleichzeitig durchgeführt, wobei die Ventile in der ersten Leitung 30 so geschaltet sind, dass eine Elektrolytlösung aus dem zweiten Vorratsbehälter 20b mit Stickstoff aus der weiteren Reduktionsmitteleinleitung 34b versetzt wird und dann zum Anodeneinlassanschluss 31 und gleichzeitig zum Kathodeneinlassanschluss 32 geleitet wird. Während der Spülschritte wird der elektrochemische Ozonisator 70 abgeschaltet.

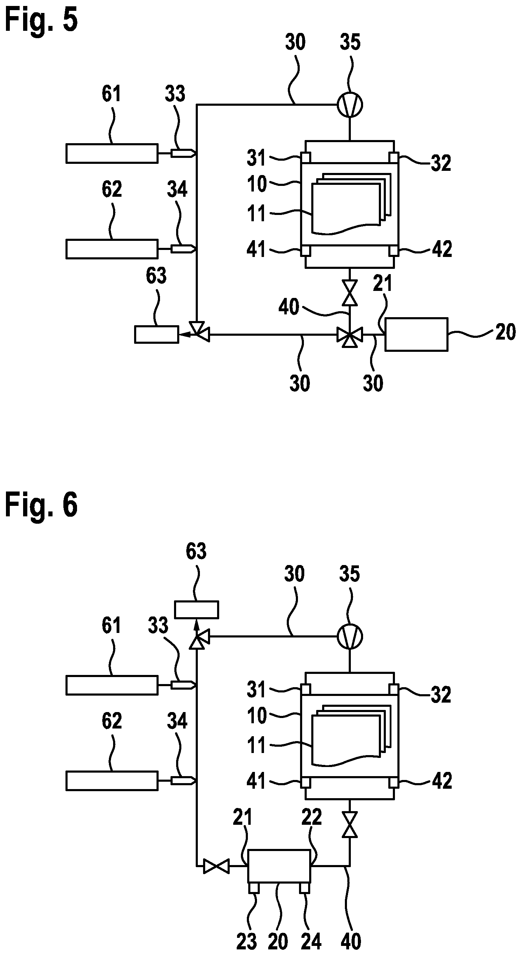

Eine Vorrichtung gemäß einem fünften Ausführungsbeispiel der Erfindung ist in Fig. 5 dargestellt. Diese ist dazu vorgesehen, die Elektrolytlösung mehrfach im Kreislauf zu führen. Hierzu wird sie aus einem Vorratsbehälter 20 in die erste Leitung 30 eingespeist und durch die Brennstoffzelle 10 geleitet. Durch die zweite Leitung 40 wird sie anschließend an einem Verzweigungspunkt der ersten Leitung 30 und der zweiten Leitung 40 in die erste Leitung 30 zurückgeführt. Stromabwärts dieses Verzeigungspunktes kann sie je nach Verfahrensschritt durch die Oxidationsmitteleinleitung 33 oder die Reduktionsmitteleinleitung 34 mit Ozon, Stickstoff oder Wasserstoff bzw. einem Wasserstoff-/Kohlenmonoxid-Gemisch versetzt werden. Wenn sie die gesamte Menge eines gelösten Metalls aufgenommen hat, kann die Elektrolytlösung durch geeignetes Schalten von Ventilen in den Vorratsbehälter 20 zurückgepumpt werden und diesem entnommen werden. Anschließend wird eine neue Elektrolytlösung mit einem anderen pH-Wert eingefüllt.

Gemäß einem sechsten Ausführungsbeispiel der Erfindung ist eine weitere Vorrichtung vorgesehen, die in Fig. 6 dargestellt ist. Auch diese ermöglicht eine kontinuierliche Führung der Elektrolytlösung in einem Kreislauf. Der Vorratsbehälter 20 ist allerdings so angeordnet, dass er mit seiner Auslassöffnung 21 mit der ersten Leitung und mit seiner Einlassöffnung 22 mit der zweiten Leitung verbunden ist und somit einen Teil des Kreislaufs bildet. Die in den anderen Ausführungsbeispielen nicht dargestellte Messeinheit 23 zur Ermittlung des Metallgehaltes der Elektrolytlösung ist in diesem Ausführungsbeispiel im Vorratsbehälter 20 angeordnet. Sobald die Gewinnung eines Metalls abgeschlossen ist, wird ein Ventil an der Auslassöffnung 21 des Vorratsbehälters 20 geschlossen und die gesamte Elektrolytlösung in den Vorratsbehälter 20 zurückgepumpt und mittels einer Entnahmeöffnung 24 aus diesem entnommen. Dann wird der Vorratsbehälter 20 in derselben Weise wie im fünften Ausführungsbeispiel der Erfindung mit einer anderen Elektrolytlösung befüllt.

## Patentansprüche

1. Verfahren zur Gewinnung von Gold und/oder Silber und/oder mindestens einem Platinmetall aus Bestandteilen eines Brennstoffzellenstapels (11) einer Brennstoffzelle (10) oder eines Elektrolysators, worin die Bestandteile in der Brennstoffzelle (10) oder dem Elektrolysator in mindestens einem Oxidationsschritt mit einem Strom einer wässrigen Elektrolytlösung behandelt werden und mit mindestens einem gasförmigen Oxidationsmittel behandelt werden und die Bestandteile in der Brennstoffzelle (10) oder dem Elektrolysator in mindestens einem Reduktionsschritt mit einem Strom einer wässrigen Elektrolytlösung behandelt werden, und mit mindestens einem gasförmigen Reduktionsmittel behandelt werden.

2. Verfahren nach Anspruch 1, **dadurch gekennzeichnet, dass** die Bestandteile zwischen dem Oxidationsschritt und dem Reduktionsschritt in einem Spülschritt mit mindestens einem Inertgas behandelt werden.

3. Verfahren nach Anspruch 2, **dadurch gekennzeichnet, dass** im Oxidationsschritt, im Reduktionsschritt und im Spülschritt dieselbe Elektrolytlösung verwendet wird.

4. Verfahren nach einem der Ansprüche 1 bis 3, **dadurch gekennzeichnet, dass** die Elektrolytlösung aus mindestens einem Vorratsbehälter (20, 20a-b) zu den Bestandteilen geleitet wird und nach Kontakt mit den Bestandteilen in einem Sammelbehälter (50) gesammelt wird.

5. Verfahren nach einem der Ansprüche 1 bis 3, **dadurch gekennzeichnet, dass** die Elektrolytlösung in einem Kreislauf geführt wird, in dem sie mehrfach mit den Bestandteilen in Kontakt gebracht wird.

6. Verfahren nach einem der Ansprüche 1 bis 5, **dadurch gekennzeichnet, dass** die Elektrolytlösung mindestens ein Alkalichlorid, Alkalibromid und/oder Alkaliiodid enthält.

7. Verfahren nach einem der Ansprüche 1 bis 6, **dadurch gekennzeichnet, dass** die Bestandteile in einem ersten Teil des Verfahrens mit einer Elektrolytlösung behandelt werden, deren pH-Wert größer als 7 ist, und in einem zweiten Teil des Verfahrens mit einer Elektrolytlösung behandelt werden, deren pH-Wert kleiner als 7 ist.

8. Vorrichtung zur Gewinnung von Gold und/oder Silber und/oder mindestens einem Platinmetall aus Bestandteilen eines Brennstoffzellenstapels (11) einer Brennstoffzelle (10) oder eines Elektrolysators, aufweisend
- mindestens einen Vorratsbehälter (20, 20a-b) für eine Elektrolytlösung,
- eine erste Leitung (30), welche mit einer Auslassöffnung (21) des mindestens einen Vorratsbehälters (20, 20a-b) verbunden ist, und welche einen Anodeneinlassanschluss (31) aufweist, welcher an einem Anodeneinlass einer Brennstoffzelle (10) oder eines Elektrolysators angeschlossen ist und einen Kathodeneinlassanschluss (32) aufweist, welcher an einem Kathodeneinlass einer Brennstoffzelle (10) oder eines Elektrolysators angeschlossen ist,
- mindestens eine Oxidationsmitteleinleitung (33), die eingerichtet ist, um mindestens ein gasförmiges Oxidationsmittel in die erste Leitung (30) einzuleiten,
- mindestens eine Reduktionsmitteleinleitung (34, 34a-b), die eingerichtet ist, um mindestens ein gasförmiges Reduktionsmittel und/oder Inertgas in die erste Leitung (30) einzuleiten, und
- mindestens eine erste Pumpe (35, 35a-c), die in der ersten Leitung (30) angeordnet ist.

9. Vorrichtung nach Anspruch 8, weiterhin aufweisend
- eine zweite Leitung (40), welche einen Anodenauslassanschluss (41) und einen Kathodenauslassanschluss (42) für die Brennstoffzelle (20) aufweist,
- einen Sammelbehälter (50) für die Elektrolytlösung, welcher mit der zweiten Leitung (40) verbunden ist, und
- mindestens eine zweite Pumpe (43), die in der zweiten Leitung (40) angeordnet ist.

10. Vorrichtung nach Anspruch 8, weiterhin aufweisend
- eine zweite Leitung (40), welche einen Anodenauslassanschluss (41) aufweist, welcher an einem Anodenauslass der Brennstoffzelle (10) oder des Elektrolysators angeschlossen ist und einen Kathodenauslassanschluss (42), welcher an einem Kathodenauslass der Brennstoffzelle (10) oder des Elektrolysators angeschlossen ist, und die stromaufwärts der Oxidationsmitteleinleitung (33) und der Reduktionsmitteleinleitung (34) mit der ersten Leitung (30) verbunden ist.

11. Vorrichtung nach Anspruch 8, weiterhin aufweisend
- eine zweite Leitung (40), welche einen Anodenauslassanschluss (41) aufweist, welcher an einem Anodenauslass der Brennstoffzelle (10) oder des Elektrolysators angeschlossen ist und einen Kathodenauslassanschluss (42) aufweist welcher an einem Kathodenauslass der Brennstoffzelle (10) oder des Elektrolysators angeschlossen ist, und die mit einer Einlassöffnung (22) des Vorratsbehälters (20) verbunden ist.

12. Vorrichtung nach einem der Ansprüche 8 bis 11, weiterhin aufweisend
- einen elektrochemischen Ozonisator (70), mit einem Ozonauslass und einem Wasserstoffauslass, wobei der Ozonauslass als Oxidationsmitteleinleitung (33) fungiert und der Wasserstoffauslass als Reduktionsmitteleinleitung (34) fungiert.

## Claims

1. Process for recovering gold and/or silver and/or at least one platinum metal from constituents of a fuel cell stack (11) of a fuel cell (10) or of an electrolyzer, wherein the constituents are treated with a stream of an aqueous electrolyte solution and with at least one gaseous oxidant in at least one oxidation step in the fuel cell (10) or the electrolyzer and the constituents are treated with a stream of an aqueous electrolyte solution and with at least one gaseous reducing agent in at least one reduction step in the fuel cell (10) or the electrolyzer.

2. Process according to Claim 1, **characterized in that** the constituents are treated with at least one inert gas in a flushing step between the oxidation step and the reduction step.

3. Process according to Claim 2, **characterized in that** the same electrolyte solution is used in the oxidation step, in the reduction step and in the flushing step.

4. Process according to any of Claims 1 to 3, **characterized in that** the electrolyte solution is conveyed from at least one stock vessel (20, 20a-b) to the constituents and after contact with the constituents is collected in a collection vessel (50).

5. Process according to any of Claims 1 to 3, **characterized in that** the electrolyte solution is conveyed in a circuit in which it is brought into contact with the constituents a number of times.

6. Process according to any of Claims 1 to 5, **characterized in that** the electrolyte solution contains at least one alkali metal chloride, alkali metal bromide and/or alkali metal iodide.

7. Process according to any of Claims 1 to 6, **characterized in that** the constituents are treated with an electrolyte solution having a pH of greater than 7 in a first part of the process and are treated with an electrolyte solution having a pH of less than 7 in a second part of the process.

8. Apparatus for recovering gold and/or silver and/or at least one platinum metal from constituents of a fuel cell stack (11) of a fuel cell (10) or of an electrolyzer, comprising
- at least one stock vessel (20, 20a-b) for an electrolyte solution,
- a first conduit (30) which is connected to an outlet opening (21) of the at least one stock vessel (20, 20a-b) and has an anode inlet connection (31) connected to an anode inlet of a fuel cell (10) or of an electrolyzer and has a cathode inlet connection (32) connected to a cathode inlet of a fuel cell (10) or of an electrolyzer,
- at least one oxidant feed conduit (33) which is configured for introducing at least one gaseous oxidant into the first conduit (30),
- at least one reducing agent feed conduit (34, 34a-b) which is configured for introducing at least one gaseous reducing agent and/or inert gas into the first conduit (30) and
- at least one first pump (35, 35a-c) which is arranged in the first conduit (30).

9. Apparatus according to Claim 8, further comprising
- a second conduit (40) which has an anode outlet connection (41) and a cathode outlet connection (42) for the fuel cell (20),
- a collection vessel (50) for the electrolyte solution which is connected to the second conduit (40) and
- at least one second pump (43) which is arranged in the second conduit (40).

10. Apparatus according to Claim 8, further comprising
- a second conduit (40) which has an anode outlet connection (41) connected to an anode outlet of the fuel cell (10) or of the electrolyzer and a cathode outlet connection (42) connected to a cathode outlet of the fuel cell (10) or of the electrolyzer and is connected to the first conduit (30) upstream of the oxidant feed conduit (33) and the reducing agent feed conduit (34).

11. Apparatus according to Claim 8, further comprising
- a second conduit (40) which has an anode outlet connection (41) connected to an anode outlet of the fuel cell (10) or of the electrolyzer and has a cathode outlet connection (42) connected to a cathode outlet of the fuel cell (10) or of the electrolyzer and is connected to an inlet opening (22) of the stock vessel (20).

12. Apparatus according to any of Claims 8 to 11, further comprising
- an electrochemical ozonizer (70) having an ozone outlet and a hydrogen outlet, where the ozone outlet functions as oxidant feed conduit (33) and the hydrogen outlet functions as reducing agent feed conduit (34).

## Revendications

1. Procédé d'extraction d'or et/ou d'argent et/ou d'au moins un métal de platine à partir de composants d'une pile de cellules à combustible (11) d'une cellule à combustible (10) ou d'un électrolyseur, dans lequel les composants dans la pile à combustible (10) ou l'électrolyseur sont, au cours d'au moins une étape d'oxydation, traités avec un flux d'une solution électrolytique aqueuse et traités avec au moins un agent oxydant gazeux, et les composants dans la pile à combustible (10) ou l'électrolyseur sont, au cours d'au moins une étape de réduction, traités avec un flux d'une solution électrolytique aqueuse, et traités avec au moins un agent réducteur gazeux.

2. Procédé selon la revendication 1, **caractérisé en ce que** les composants sont traités entre l'étape d'oxydation et l'étape de réduction dans une étape de rinçage au moyen d'au moins un gaz inerte.

3. Procédé selon la revendication 2, **caractérisé en ce que** la même solution électrolytique est utilisée lors de l'étape d'oxydation, lors de l'étape de réduction et lors de l'étape de rinçage.

4. Procédé selon l'une des revendications 1 à 3, **caractérisé en ce que** la solution électrolytique est acheminée vers les composants à partir d'au moins un réservoir de stockage (20, 20a-b) et est collectée dans un réservoir collecteur (50) après avoir été en contact avec les composants.

5. Procédé selon l'une des revendications 1 à 3, **caractérisé en ce que** la solution électrolytique circule dans un circuit dans lequel elle est mise en contact à plusieurs reprises avec les composants.

6. Procédé selon l'une des revendications 1 à 5, **caractérisé en ce que** la solution électrolytique contient au moins un chlorure alcalin, un bromure alcalin et/ou un iodure alcalin.

7. Procédé selon l'une des revendications 1 à 6, **caractérisé en ce que** les composants sont, dans une première partie du procédé, traités avec une solution électrolytique dont le pH est supérieur à 7, et, dans une deuxième partie du procédé, avec une solution électrolytique dont le pH est inférieur à 7.

8. Dispositif pour l'extraction d'or et/ou d'argent et/ou d'au moins un métal de platine à partir de composants d'une pile de piles à combustible (11) d'une pile à combustible (10) ou d'un électrolyseur, comprenant
- au moins un réservoir de stockage (20, 20a-b) pour une solution électrolytique,
- une première conduite (30), qui est reliée à une ouverture de sortie (21) dudit au moins un réservoir (20, 20a-b) et qui comprend un raccord (31) d'entrée d'anode raccordé à une entrée d'anode d'une pile à combustible (10) ou d'un électrolyseur, et qui comprend un raccord (32) d'entrée de cathode raccordé à une entrée de cathode d'une pile à combustible (10) ou d'un électrolyseur,
- au moins une entrée (33) d'agent oxydant, qui est conçue pour introduire au moins un agent oxydant gazeux dans la première conduite (30),
- au moins une entrée (34, 34a-b) d'agent réducteur, qui est conçue pour introduire au moins un agent réducteur gazeux et/ou un gaz inerte dans la première conduite (30), et
- au moins une première pompe (35, 35a-c), qui est agencée dans la première conduite (30).

9. Dispositif selon la revendication 8, comprenant en outre
- une deuxième conduite (40), qui présente un raccord (41) de sortie d'anode et un raccord (42) de sortie de cathode pour la pile à combustible (20),
- un récipient collecteur (50) pour la solution électrolytique, qui est relié à la deuxième conduite (40), et
- au moins une deuxième pompe (43), agencée dans la deuxième conduite (40).

10. Dispositif selon la revendication 8, comprenant en outre
- une deuxième conduite (40), qui présente un raccord (41) de sortie d'anode raccordé à une sortie d'anode de la pile à combustible (10) ou de l'électrolyseur et un raccord (42) de sortie de cathode raccordé à une sortie de cathode de la pile à combustible (10) ou de l'électrolyseur, et qui est reliée à la première conduite (30), en amont de l'entrée (33) d'agent oxydant et de l'entrée (34) d'agent réducteur.

11. Dispositif selon la revendication 8, comprenant en outre
- une deuxième conduite (40) qui présente un raccord (41) de sortie d'anode raccordé à une sortie d'anode de la pile à combustible (10) ou de l'électrolyseur et qui présente un raccord (42) de sortie de cathode raccordé à une sortie de cathode de la pile à combustible (10) ou de l'électrolyseur, et qui est reliée à une ouverture d'entrée (22) du réservoir (20).

12. Procédé selon l'une des revendications 8 à **11,** comprenant en outre :
- un ozoniseur électrochimique (70) comprenant une sortie d'ozone et une sortie d'hydrogène, la sortie d'ozone servant d'entrée (33) d'agent oxydant et la sortie d'hydrogène servant d'entrée (34) d'agent réducteur.
